# EUROPÄISCHE PATENTSCHRIFT

(11) **EP 1 275 796 B1**
(45) Veröffentlichungstag und Bekanntmachung des Hinweises auf die Patenterteilung: **19.11.2008**
(21) Anmeldenummer: 02450146.2
(22) Anmeldetag: 01.07.2002
(51) Int. Cl.: E04G 9/05, E04G 9/04

(54) **Bauelement, insbesondere Schaltafel, mit Schutzschicht**
Construction element, especially shuttering plate, with protective layer
Elément de construction, en particulier panneau de coffrage, avec couche protective

(30) Priorität: 09.07.2001 AT 10672001
(43) Veröffentlichungstag der Anmeldung: 15.01.2003
(73) Patentinhaber: ISOSPORT VERBUNDBAUTEILE GESELLSCHAFT MBH, 7000 Eisenstadt (AT)
(72) Erfinder: Mikats, Günther, A-7024 Hirm (AT)
(74) Vertreter: Patentanwälte BARGER, PISO & PARTNER

(56) Entgegenhaltungen:
- EP-A- 0 782 917
- CH-A- 669 558

## Beschreibung

Die Erfindung betrifft Bauelemente, insbesondere Schaltafeln, welche aus an sich bekannten Bauplatten bestehen (siehe z.B. EP-A-782 917).

Bauelemente, insbesondere Schaltafeln sind aus dem Betonbau bekannt und dienen dazu, Teile des Baukörpers einzuschalen und mit Beton auszugießen, der dann innerhalb der Schalung aushärtet. Derartige Schaltafeln bestehen aus holzschichtverleimten Platten, Kunststoffplatten sowie Kunststoff-Metall-Verbundplatten. Holzschichtverleimte Platten haben gute Kratzfestigkeiten, haben jedoch den Nachteil, daß sie bei ihrer Verwendung, wie beispielsweise beim Nageln, zum Splittern neigen. Weiters ist die Oberfläche von Holztafeln relativ rauh, so daß bei jedem Schalvorgang Schalöl verwendet werden muß, damit sich der Beton von der Oberfläche der Schaltafel gut löst. Beim Einsatz von Kunststoffplatten bzw. Kunststoff-Metall-Verbundplatten kann großteils auf den Einsatz von Schalöl verzichtet werden, jedoch sind diese Materialien gegenüber Zerkratzen wesentlich anfälliger. Dies führt insbesondere bei der Reinigung der Schaltafeln für deren Wiederverwendung zu Problemen, da betonverunreinigte Schaltafeln auf den Baustellen mit Schabern bzw. Hochdruckreinigern von Verschmutzungen gesäubert werden. Dadurch können Beschädigungen an der Oberfläche der Schaltafeln auftreten, so daß deren Lebensdauer wesentlich reduziert wird.

Aufgabe der vorliegenden Erfindung ist es daher die Lebensdauer der Schaltafeln zu erhöhen und eine Wiederverwendbarkeit zu erreichen, wobei jedoch das Gewicht sowie die mechanische Belastbarkeit der Schaltafeln im Vergleich zu bekannten Schaltafeln beibehalten werden soll.

Zur Lösung dieser Aufgabe wird ein Bauelement, insbesondere eine Schaltafel, gemäß Patentanspruch vorgeschlagen.

Die Schutzschicht ist mit der Bauplatte ablösbar verbunden. Dadurch kann nämlich nach der Verwendung des erfindungsgemäßen Bauelementes oder bei dessen Verschleiß die Schutzschicht von der Außenschicht entfernt und bei weiterer Verwendung neuerlich auf diese aufgebracht werden.

Ein solches Bauelementwird hergestellt indem auf eine Bauplatte die Schutzschicht und die Kleberschicht durch Kaschieren aufgebracht werden.

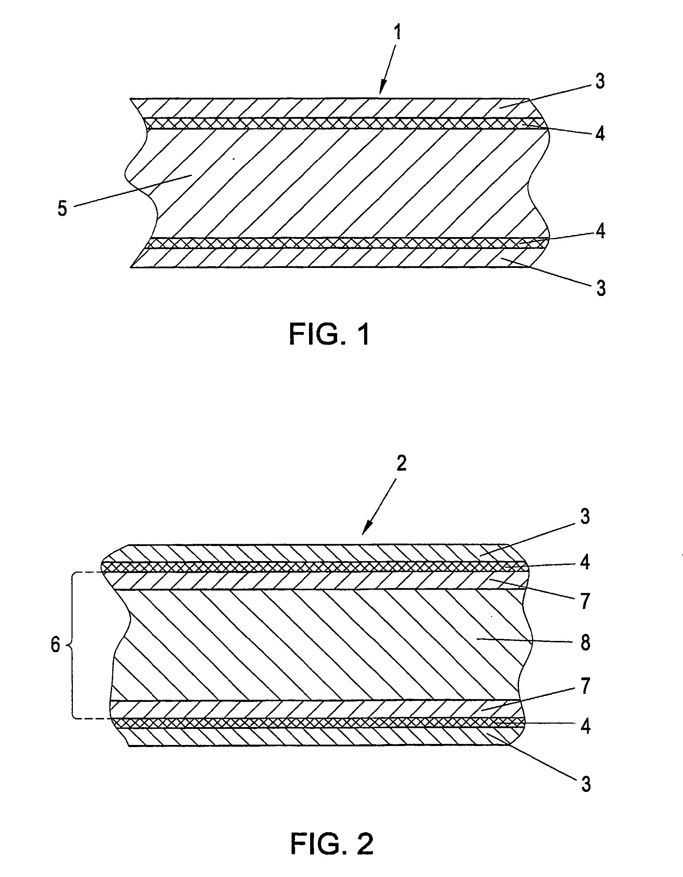

Die Erfindung wird nunmehr anhand der Fig. 1 bis 3 sowie anhand möglicher Ausführungsformen zur Durchführung der Erfindung näher erläutert.

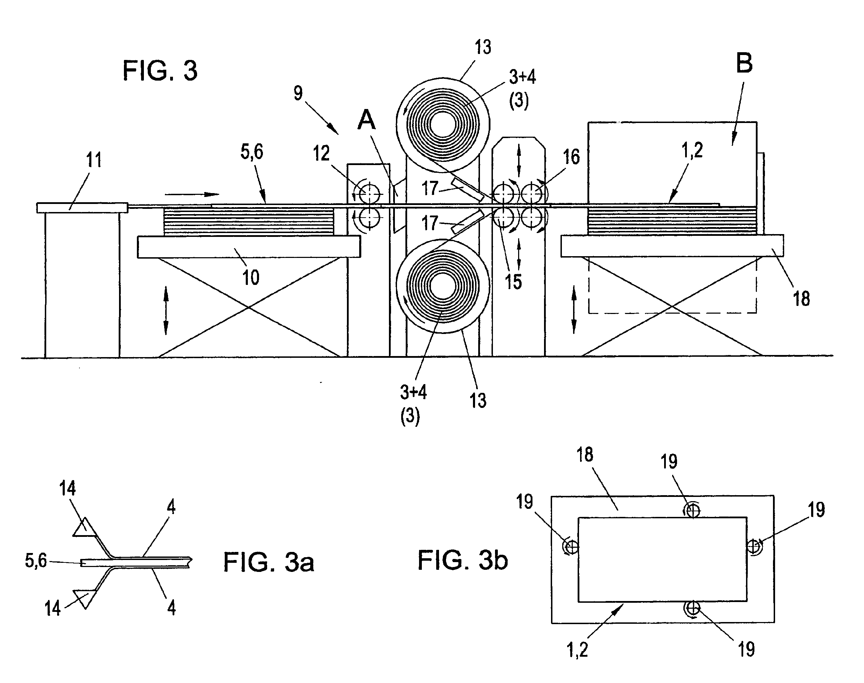

Es zeigt: Fig. 1 eine Ausführungsform des erfindungsgemäßen Bauelementes, nämlich eine Schaltafel 1 mit einer Schutzschicht 3, die über eine Kleberschicht 4 auf eine holzschichtverleimte Platte 5 aufgebracht ist, Fig. 2 eine Ausführungsform wie in Fig. 1, jedoch mit dem Unterschied, daß die Bauplatte 6 eine Kunststoff-Metall-Verbundplatte ist und Fig. 3 eine Vorrichtung zur Erläuterung einer Ausführungsform des erfindungsgemäßen Verfahrens zum Herstellen der erfindungsgemäßen Bauplatte.

Das erfindungsgemäße Bauelement 1, wie es beispielsweise in Figur 1 dargestellt ist, kann im wesentlichen aus einer an sich bekannten holzschichtverleimten Bauplatte 5 bestehen. Diese kann zusätzlich (nicht dargestellt) Beschichtungen aus mit Phenolharz getränkten Trägermaterialien aufweisen.

Das erfindungsgemäße Bauelement 2, wie es beispielsweise in Figur 2 dargestellt ist, kann im wesentlichen aus einer an sich bekannten Kunststoff-Metallverbundplatte 6 bestehen. Diese weist beispielsweise eine Metallschicht 7 auf, welche vorzugsweise ein Aluminiumblech ist. Dieses Aluminiumblech kann vollflächig oder perforiert oder lochgestanzt sein. Als Kunststoffschicht 8 liegt eine kompakte oder geschäumte Thermoplastschicht vor.

Diese an sich bekannten Bauplatten 5,6 weisen erfindungsgemäß eine Schutzschicht 3, vorzugsweise in Form einer transparenten Kunststofffolie auf. Die in der Schutzschicht eingesetzten Kunststoffe können aus der Gruppe der Ionomere, Polymethyl(meth)acrylate, Polyamide, Polyamid-Blends und Polyester ausgewählt werden. Wichtig ist die hohe Kratzfestigkeit der Schutzschicht. Als Kleber in der Kleberschicht 4 werden bevorzugt Schmelzkleber eingesetzt. Diese können entweder aus reinen thermoplastischen Kunststoffen bestehen, oder es können für besonders hohe Temperaturbelastungen auch reaktive Schmelzkleber eingesetzt werden, die beim Aufkaschieren auf die Bauplatte 5,6 aufzubringen sind.

Das Herstellen der erfindungsgemäßen Bauelemente 1,2 erfolgt beispielsweise in einer Kaschiervorrichtung 9, wie sie in Figur 3 dargestellt ist. Dazu werden die Bauplatten 5,6 auf den Hubtisch 10 gelegt und mittels eines Stempels 11 kontinuierlich der Kaschierstation zugeführt. Die Zuführung erfolgt über das Walzenpaar 12, so daß es während des Kaschiervorganges zu keinen unerwünschten Höhenverstellungen kommt. Es können nun einseitig oder beidseitig auf die Bauplatten 5,6 die Rollen 13 kontinuierlich aufkaschiert werden. Auf den Rollen sind entweder die Schutzschicht 3 und die Kleberschicht 4 als Folienverbund oder die Schutzschicht 3 als Monofolie, d.h. ohne Kleberschicht 4, gelagert. Als Kleber wird vorzugsweise ein Schmelzkleber verwendet.

Wird eine Monofolie als Schutzschicht 3 eingesetzt, so kann auf diese gemäß einer möglichen Verfahrensvariante (siehe dazu Detailausschnitt A) während des Verfahrens der Schmelzkleber 4 über die Düsen 14 aufgetragen werden. Die Schmelzkleberschicht ist abhängig von der Rauhtiefe der Platten zwischen 50 und 200 µ zu wählen.

Wenn jedoch als beispielhafte Variannte von den Lagerrollen 13 ein Folienverbund bestehend aus Schutzschicht 3 und Schmelzkleberschicht 4 zu beiden Seiten an die Bauplatten 5,6 herangeführt wird, so sind zusätzlich Heizelemente 17 vorgesehen, welche dazu dienen, den Schmelzkleber 4 oberhalb seiner Schmelztemperatur zu erweichen. Diese nunmehr klebrige, thermoplastische Schicht 4 wird an die Oberfläche der Bauplatten 5,6 beidseitig herangeführt und gemeinsam mit diesen dem Walzenpaar 15 zugeführt. Durch den im Walzenspalt erzeugten Anpreßdruck werden die Bauplatten mittels Schmelzkleber mit der Schutzschicht verbunden. Dieser Vorgang wird zum weiteren Verfestigen der Verbindung an dem nachgeschalteten Walzenpaar 16 wiederholt.

Die endgefertigten Bauelemente 1,2 werden abschließend auf dem Hubtisch 18 gestapelt, wobei vorher die Schutzschicht auf die Länge der Schaltafeln abgeschnitten wird.

In Fig. 3b wird die Draufsicht B auf den Hubtisch 18 gezeigt, auf welchem die endgefertigten Platten 1,2 gelagert sind.

Um auch im Kantenbereich eine Schutzschicht 3 wie oben beschrieben aufbringen zu können, wird auch im Kantenbereich eine schmelzkleberbeschichtete Schutzschicht mittels der Rollen 19 aufgetragen, so daß die Bauelemente auch im Kantenbereich mit einer wasserundurchlässigen Schutzschicht versehen sind. Diese schützt insbesondere holzschichtverleimte Bauplatten vor Eindringen von Nässe und Mikroben.

Die endgefertigten Bauelemente, vorzugsweise die Schaltafeln 1,2 wie sie beispielsweise mittels eines Verfahrens in der gemäß Fig. 3 beschriebenen Kaschierstation hergestellt werden, weisen im Vergleich mit bekannten Schaltafeln eine erhöhte Resistenz gegenüber Beschädigungen, wie sie beispielsweise durch Zerkratzen verursacht werden, auf. Diese erhöhte Resistenz wird durch die vorzugsweise transparente Schutzschicht 3 verursacht. Diese verlängert nicht nur die Lebensdauer, sondern ermöglicht es auch, daß die erfindungsgemäßen Bauelemente wiederverwendbar sind. Wird das erfindungsgemäße Bauelement 1,2 insbesondere im Bereich der Schmelzkleberschicht erwärmt, wie dies beim Verfahren zu dessen Herstellung mittels der Heizelemente 17 erfolgt, so kann die Schutzschicht 3 von der Bauplatte 5,6 abgelöst und eine neue Schutzschicht aufgebracht werden. Die alte Schutzschicht ist recyclierbar. Auf diese Weise kann die Lebensdauer der erfindungsgemäßen Bauelemente erheblich verlängert werden, da die Schutzschicht 3 bei Beschädigungen wie Kratzern oder gänzlichem Verschleiß ausgetauscht werden kann. Weiters ist die Verwendung von Schalöl kaum mehr notwendig. Vorzugsweise befinden sich betonabweisende Öle oder Wachse als Additive in der Schutzschicht.

Bedingt durch die relativ dünnen Folienstärken der Schutzschicht 3, welche je nach Anwendung in einem Bereich von 0,3 bis 1,0 mm liegen, verändern sich auch die mechanischen Festigkeitswerte der Schaltafel, wie beispielsweise der E-Modul, kaum.

Da die Schutzschicht 3 vorzugsweise transparent ist, besteht die Möglichkeit, an den Bauplatten 5,6 Aufdrucke anzubringen, welche auch nach dem Aufbringen der Schutzschicht 3 noch lesbar und vor Beschädigung geschützt sind.

Weiters ist auch die Nagelbarkeit der erfindungsgemäßen Bauelemente, beispielsweise im Fall von holzschichtverleimten Bauplatten 5 verbessert, da das Splittern von Holz verhindert wird. Ebenso sind nach dem Entfernen der Nägel die gebildeten Löcher kaum bis gar nicht sichtbar. Dieser vorteilhafte Effekt wird insbesondere durch das Rückstellvermögen der in der Schutzschicht 3 eingesetzten Stoffe erzielt, so daß ein Schließen der beim Nageln erzeugten Löcher bewirkt wird.

Weiters kann durch die Schutzschicht 3 für den Fall, daß eine holzschichtverleimte Bauplatte zum Einsatz kommt, vermieden werden, daß Nässe oder Mikroben in das Holz eindringen können.

Zusammenfassend kann gesagt werden, daß ein Bauelement gemäß Erfindung, welches im wesentlichen aus an sich bekannten Bauplatten besteht, bedingt durch die Schutzschicht(en) eine erhöhte Lebensdauer aufweist. Diese wird zusätzlich noch verbessert, wenn Schutzschicht und Bauplatte ablösbar verbunden sind, das heißt, daß die Schutzschicht bei Verschleiß wieder abgelöst und durch eine neue Schutzschicht ersetzt werden kann. Besteht die Bauplatte zum größten Teil aus Holz, wie dies bei holzschichtverleimten Platten der Fall ist, so wird zusätzlich auf Grund der Schutzschicht ein Absplittern beim Bearbeiten sowie ein Eindringen von Nässe und Mikroben vermieden.

## Patentansprüche

1. Bauelement (1,2), insbesondere Schalttafel, bestehend aus einer Bauplatte (5, 6) die ein- oder beidseitig über eine Kleberschicht (4) mit einer Schutzschicht (3) verbunden ist, **dadurch gekennzeichnet, daß** die Schutzschicht (3) mit der Bauplatte (5, 6) ablösbar verbunden ist, wobei die Verbindung wischen Bauplatte und Schutzschicht mittels eines Schmelzklebers erfolgt und die Schutzschicht eine transparente oder eingefärbte Kunststoffolie ist.

## Claims

1. A building element (1,2), in particular a formwork panel, consisting of a building board (5,6) which on one or both sides is joined to a protective layer (3) by way of an adhesive layer (4),
**characterised in that** the protective layer (3) is separably joined to the building board (5,6), wherein the joint between the building board and the protective layer is affected by means of a hot-melt adhesive and the protective layer is a transparent or coloured plastics film.

## Revendications

1. Elément de construction (1, 2), en particulier panneau de coffrage, constitué par une plaque de construction (5, 6) qui est reliée sur un côté ou sur deux côtés à une couche protectrice (3) via une couche de colle (4),
**caractérisé en ce que** la couche protectrice (3) est reliée de façon détachable à la plaque de construction (5, 6), la liaison entre la plaque de construction et la couche protectrice étant réalisée au moyen d'une colle fusible et la couche protectrice étant une feuille en matière plastique transparente ou colorée.
